(19) **Europäisches Patentamt / European Patent Office / Office européen des brevets**

(11) **EP 4 228 290 A1**

(12) # EUROPEAN PATENT APPLICATION
published in accordance with Art. 153(4) EPC

(43) Date of publication:
**16.08.2023 Bulletin 2023/33**

(21) Application number: **21877468.5**

(22) Date of filing: **30.09.2021**

(51) International Patent Classification (IPC):
$H04W\ 4/00^{(2018.01)}$       $H04W\ 4/44^{(2018.01)}$
$H04W\ 48/18^{(2009.01)}$

(52) Cooperative Patent Classification (CPC):
**H04W 40/08; H04W 4/00; H04W 4/44;
H04W 36/24; H04W 36/36; H04W 40/12;
H04W 48/18**

(86) International application number:
**PCT/JP2021/036081**

(87) International publication number:
**WO 2022/075167 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.10.2020   JP 2020170640**

(71) Applicant: **DENSO CORPORATION
Kariya-city,
Aichi-pref, 448-8661 (JP)**

(72) Inventor: **HOSHINO Masayuki
Kariya-city, Aichi-pref., 448-8661 (JP)**

(74) Representative: **Winter, Brandl - Partnerschaft
mbB
Alois-Steinecker-Straße 22
85354 Freising (DE)**

(54) **WIRELESS COMMUNICATION DEVICE FOR VEHICLE AND WIRELESS COMMUNICATION METHOD**

(57)    A wireless communication device (5) used in a vehicle has multiple SIMs, and is configured to use multiple APNs in parallel. The wireless communication device (5) includes, as functional units, a transmission power control unit (F33), a communication request acquisition unit (F34), and a path selection unit (F35). The transmission power control unit (F33) acquires a PHR (Power Headroom) of the wireless communication service corresponding to each APN. PHR represents a remaining transmission power. The communication request acquisition unit (F34) acquires a delay allowable amount indicating a length of an allowable communication delay time from each in-vehicle device (6) connected to the wireless communication device (5). The path selection unit (F35) preferentially allocates a wireless communication service having a large PHR to the in-vehicle device (6) having a small delay allowable amount.

**FIG. 4**

```
            START
              │
   IDENTIFY SERVING CELL FOR EACH SIM      ～ S1
              │
   ACQUIRE PHR FOR EACH APN                ～ S2
              │
   ACQUIRE DELAY REQUEST FOR EACH DEVICE/APP   ～ S3
              │
   SELECT COMMUNICATION PATH FOE EACH DEVICE/APP  ～ S4
              │
   START DATA COMMUNICATION                ～ S5
              │
             END
```

EP 4 228 290 A1

**Description**

CROSS REFERENCE TO RELATED APPLICATION

The present application is based on Japanese Patent Application No. 2020-170640 filed on October 8, 2020, and the entire disclosure of the above application is incorporated herein by reference.

TECHNICAL FIELD

The present disclosure relates to a vehicle wireless communication device and a communication control method that control a communication path between an in-vehicle device and an external device.

BACKGROUND ART

Patent Literature 1 discloses a configuration that enables wireless communication using multiple types of communication media. In the configuration, based on multiple types of indices indicating a radio wave environment, one communication media used for data communication is selected. Specifically, the communication performance of each communication media is scored based on the number of multipaths, the degree of interference, the amount of Doppler shift, the effective throughput estimation value, and movement environment information. The communication medium with the highest score is selected.

In addition, the movement environment information in Patent Literature 1 refers to position information of wireless base stations corresponding to each communication method and obstacle environment information that are provided from the car navigation system. The obstacle environment is information indicating whether a current position is in an area with many obstacles, such as an area with tall buildings or in a mountainous area, or in an area with few obstacles.

The communication media assumed in Patent Literature 1 are, for example, FSK FM broadcasting, CD MA telephone lines, OFDM wireless LAN, QPSK road-to-vehicle communication, and the like. FSK is an abbreviation for Frequency shift keying. COMA is an abbreviation for Code Division Multiple Access. OFDM is an abbreviation for Orthogonal Frequency Division Multiplexing. QPSK is an abbreviation for Quadrature Phase Shift Keying.

In addition, 3GPP (Third Generation Partnership Project) has proposed a method of optimizing network processing according to usage characteristics of mobile communication terminals (Non-Patent Literature 1, etc.).

RELATED ART LITERATURE

PATENT LITERATURE

Patent Literature 1: JP 4655955 B2

NON-PATENT LITERATURE

Non-Patent Literature 1: 3GPP TS 36.213 V15.1.0 (2018-07) 3rd Generation Partnership Project, "Evolved Universal Terrestrial Radio Access (E-UTRA); Physical layer procedures (Release 8)"

SUMMARY OF INVENTION

Patent Literature 1 shows a method of selecting one service used for data communication from multiple wireless communication services, by using the number of multipaths, the degree of interference, the amount of Doppler shift, the effective throughput estimation value, a position of the wireless base station, and the number of obstacles. However, Patent Literature 1 does not disclose a configuration for selecting a communication service based on indices other than the above. There remains a configuration for optimizing operations of the vehicle wireless communication device by employing other parameters as indices in selecting the communication service.

In the future, a vehicle may be equipped with multiple devices that operate in cooperation with an external device through wireless communication. When the multiple devices that need to wirelessly communicate with the external device are mounted, the real-time property of a required data communication, in other words, an upper limit value of an allowable delay time and the like may differ for each device. In response to such circumstances, a device described in Patent Literature 1 does not take into consideration the characteristics of each data communication and required communication quality, and depending on the situation, there remains the possibility that an appropriate communication service cannot be selected.

The present disclosure has been made based on this situation, and it is an object of the present disclosure to provide a vehicle wireless communication device and a communication control method that are capable of reducing a risk that a delay time of communication with an external device exceeds a predetermined allowable range required by an in-vehicle device.

For achieving the purpose, in one example, a vehicle wireless communication device includes multiple subscriber identity modules, is used for a vehicle, used as an interface for communication between at least one in-vehicle device and an external device that is a different communication device placed outside the vehicle, and can use multiple wireless communication services respectively according to the multiple subscriber identity modules. The vehicle wireless communication device includes: a remaining power calculation unit that calculates, for each wireless communication service, a power headroom representing a remaining power of a transmission power with respect to a predetermined maximum transmission power based on a transmission power setting value for each wireless communication service; a delay allowable amount acquisition unit that acquires a delay allowable amount from the at least one in-vehicle device, the delay allowable amount indicating directly or indirectly a length of an allowable communication delay time; and a communication path selection unit that selects the wireless communication service among the multiple wireless communication services for communication between the at least one in-vehicle device and the external device based on the power headroom calculated by the remaining power calculation unit for each wireless communication service. The communication path selection unit preferentially allocates the wireless communication service having a large power headroom to an in-vehicle device having a small delay allowable amount.

The above power headroom represents the remaining transmission power. Therefore, it is suggested that, in a case of a wireless communication service with a large power headroom, it is possible to relatively reduce the delay time even when the communication traffic increases rapidly. Therefore, by preferentially allocating a wireless communication service with a large power headroom to an in-vehicle device with a small delay allowable amount, even when the communication traffic between the in-vehicle device and the external device increases rapidly, it is possible to reduce a risk that the delay time exceeds an allowable range of the in-vehicle device.

A communication control method for achieving the object described above is a communication control method for control of communication between at least one in-vehicle device of a vehicle and an external device that is a communication device placed outside the vehicle. The communication uses multiple wireless communication services in parallel. The multiple wireless communication services correspond, respectively, to multiple subscriber identity modules. The communication control method is executed by at least one processor. The communication control method includes: a remaining power calculation step that calculates, for each wireless communication service, a power headroom representing a remaining power of a transmission power with respect to a predetermined maximum transmission power based on a transmission power setting value for each wireless communication service; a delay allowable amount acquisition step that acquires a delay allowable amount from the at least one in-vehicle device, the delay allowable amount indicating directly or indirectly a length of allowable communication delay time; and a communication path selection step that selects the wireless communication service for communication between the at least one in-vehicle device and the external device based on the power headroom calculated by the remaining power calculation step for each wireless communication service. The communication path selection step preferentially allocates the wireless communication service having a large power headroom to an in-vehicle device having a small delay allowable amount.

According to the above method, the similar effects can be obtained by the operating principle similar to that of the vehicle wireless communication device. Each reference symbol with parentheses described in the claims indicates a correspondence relationship between a configuration described in claims and an exemplary configuration described in the embodiments of the disclosure. It should be noted that each reference symbol with parentheses described in the claims does not limit a technical scope of the present disclosure to the exemplary configuration described in the embodiments of disclosure.

BRIEF DESCRIPTION OF DRAWINGS

FIG. 1 is a diagram for describing an overview of a mobile body communication system 100.
FIG. 2 is a diagram showing an example of a configuration of an in-vehicle communication system 1.
FIG. 3 is a block diagram showing a configuration of a wireless communication device 5.
FIG. 4 is a flowchart showing a processing flow related to APN allocation.
FIG. 5 is a diagram for explaining an operation of a communication controller F3.
FIG. 6 is a diagram for explaining an operation example when determining APN allocation for each in-vehicle device 6 in consideration of a delay characteristic setting value for each APN.
FIG. 7 is a diagram for explaining an operation example when determining APN allocation for each in-vehicle device 6 in consideration of an assigned frequency for each APN.
FIG. 8 is a block diagram of a wireless communication device 5 that changes control modes according to movement speed.

FIG. 9 is a diagram showing a mode of allocating an APN for each app.

DESCRIPTION OF EMBODIMENTS

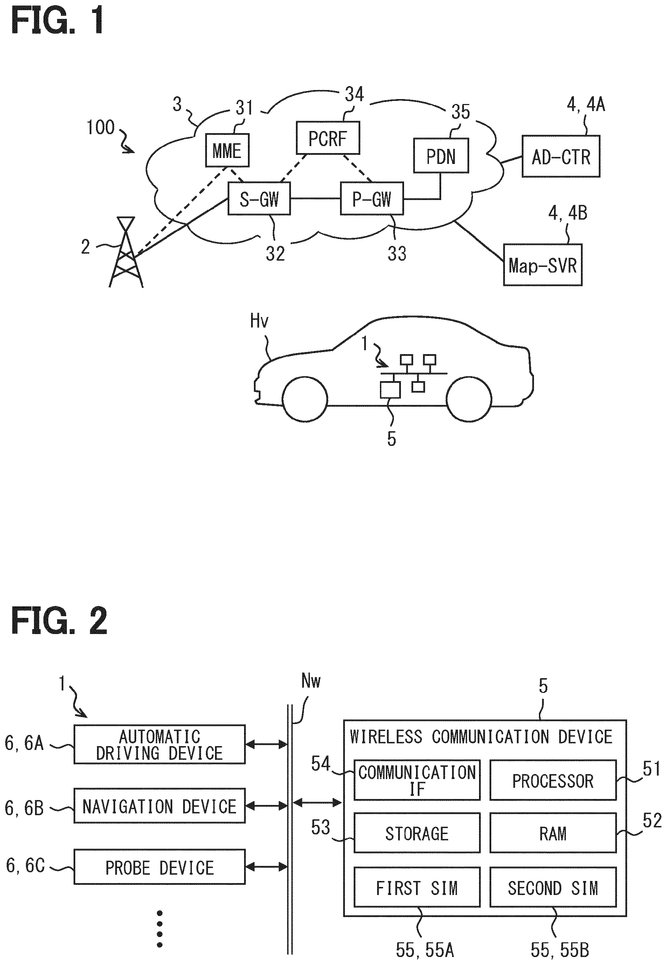

Hereinafter, an embodiment of the present disclosure will be described below with reference to the drawings. FIG. 1 is a diagram showing one example of a schematic configuration of a mobile body communication system 100 in the present disclosure. The mobile body communication system 100 provides wireless communication conforming to LTE (Long Term Evolution), for example. The parts whose description are omitted in the present embodiment can be implemented according to the method specified in LTE, such as the method disclosed in Non-Patent Literature 1. Note that the mobile body communication system 100 may provide wireless communication conforming to the 4G standard, the 5G standard, or the like. Hereinafter, the LTE, 4G, 5G, and the like will be collectively referred to as LTE and the like. The following embodiment can be implemented with appropriate changes so as to conform to 4G, 5G, and the like.

<Overall Configuration>

As shown in FIG. 1, the mobile body communication system 100 includes an in-vehicle communication system 1, a wireless base station 2, a core network 3, an automated driving management center 4A, and a map server 4B. Each of the automated driving management center 4A and the map server 4B corresponds to one example of external devices 4 for the in-vehicle communication system 1. The external devices 4 are communication devices located outside a vehicle.

The in-vehicle communication system 1 is a communication system built in a vehicle Hv. The in-vehicle communication system 1 can be installed in various vehicles that can travel on a road, such as four-wheeled vehicles, two-wheeled vehicles, three-wheeled vehicles, and the like. Motorized bicycles may also be included in two-wheeled vehicles. A vehicle Hv to which the system is applied may be an owner's car owned by an individual, or may be a vehicle provided for a car sharing service or a vehicle rental service. Also, the vehicle Hv may be a service car. The service car includes a taxi, a fixed-route bus, a shared bus, and the like. Also, the service car may be a robot taxi or a driverless bus without a driver. The service car may include a vehicle as an automated delivery robot or a driverless delivery robot that automatically transports packages to a predetermined destination. Furthermore, the vehicle Hv may be a remotely operated vehicle which is remotely operated by an operator outside the vehicle. The operator here refers to a person who has the authority to control the vehicle Hv by remote control from the outside of the vehicle Hv.

The in-vehicle communication system 1 performs data communication with the external devices 4 such as the automated driving management center 4A via the wireless base station 2 and the core network 3. The in-vehicle communication system 1 includes a wireless communication device 5 as a configuration that provides a function to perform the wireless communication. The wireless communication device 5 corresponds to a user equipment (so-called UE) for the core network 3. The wireless communication device 5 may be removable by the user. Further, the wireless communication device 5 may be a mobile terminal such as a smart phone brought into the vehicle by the user. The wireless communication device 5 corresponds to a vehicle wireless communication device.

The wireless communication device 5 is capable of using multiple wireless communication services with different APNs (Access Point Names), and performs data communication with the various external devices 4 using the wireless communication services properly. An APN is, in one aspect, an identifier that defines a communication service. An APN is associated with a telecommunications carrier (so-called carrier), which provides a communication service. When the APNs are different, even when the external devices 4 serving as communication partners for the wireless communication device 5 are the same, paths through which data flows to the external devices 4 are substantially or virtually different. The multiple wireless communication services provide communication paths different from each other. That is, the wireless communication device 5 is capable of performing data communication with the external devices 4 by using different multiple communication paths corresponding to the respective APNs. The in-vehicle communication system 1 including the wireless communication device 5 will be described later.

The wireless base station 2 is a facility that transmits and receives wireless signals to and from the in-vehicle communication system 1. The wireless base station 2 is also called an eNB (evolved NodeB). The wireless base station 2 may be a gNB (next generation NodeB) used in 5G. The wireless base station 2 is arranged for each predetermined cell. The cell corresponds to a communicable range covered by one wireless base station 2. The wireless base station 2 itself may also be called the cell. Each wireless base station 2 adjusts the transmission power of wireless signals so that a desired cell size can be obtained.

The wireless base station 2 is connected to the core network 3 via an access line such as an IP (Internet Protocol) network. The wireless base station 2 relays traffic between the wireless communication device 5 and the core network 3. The wireless base station 2 allocates a transmission opportunity to the in-vehicle communication system 1, based on a request from the in-vehicle communication system 1, for example. The transmission opportunity consists of frequency band, timing, modulation scheme and the like, which are available for data transmission.

Further, the wireless base station 2 transmits a reference signal (hereinafter, also referred to as CSI-RS which is abbreviation for CSI-Reference Signal) for acquiring information (also referred to as CSI which is abbreviation for Channel State Information) indicating a state of the transmission path. The CSI-RS is a known control signal for measuring wireless channel states. Further, the wireless base station 2 also transmits a CRS (Cell-specific RS), which is a cell-specific reference signal used for downlink reception quality measurement and the like. In one aspect, the CRS and the CSI-RS correspond to control signals for wireless communication device 5 or MME 31 to select the serving cell of the wireless communication device 5. The CRS and the CSI-RS are also simply referred to as reference signals or RSs. The RS may be periodically transmitted, or may be transmitted in response to the occurrence of a predetermined event. The RS may be transmitted, for example, when the wireless base station 2 receives an inquiry from the UE or when the frequency of occurrence of communication errors exceeds a predetermined threshold.

In addition, periodically or when a predetermined event is detected, the wireless base station 2 distributes a setting value of a transmission power of the RS (hereinafter referred to as RSPw: RS Power) as a parameter for the UE including the wireless communication device 5 to determine the transmission power of the uplink. For example, the wireless base station 2 distributes system information (referred to as SIB which is arbitration for System Information Block) including the RSPw and a wireless resource control (referred to as RRC which is arbitration for Radio Resource Control) message to each UE. As the RSPw, for example, a reference signal power included in PDSCH-Config Common can be used. As the system information including the RSPw, for example, System Information Block Type 2 can be used. As the RRC message including the RSPw, RRC Connection Reconfiguration or the like can be adopted.

The core network 3 is a so-called EPC (Evolved Packet Core). The core network 3 provides functions such as user authentication, contract analysis, data packet transfer route setting, and QoS (Quality of Service) control. The core network 3 may include public telecommunications networks provided by telecommunications service providers, such as IP networks or mobile telephone networks, for example. The core network 3 corresponds to a wireless communication network.

The core network 3 includes, for example, the MME 31, a S-GW 32, a P-GW 33 and a PCRF 34. MME stands for Mobility Management Entity. The MME 31 manages the UE located in the cell and controls the wireless base station 2. The MME 31 has a role as a gateway for control signals between the wireless base station 2 and the S-GW 32, for example. S-GW is abbreviation for Serving Gateway. The S-GW 32 is a configuration corresponding to a gateway for data from the UE. P-GW is abbreviation for Packet Data Network Gateway. The P-GW 33 corresponds to a gateway for connection to a PDN (Packet Data Network) 35 such as the Internet. The P-GW 33 allocates IP addresses and transfers packets to the S-GW. PCRF is an abbreviation for Policy and Charging Rules Function. The PCRF 34 is a logical node that performs controls for the QoS and charging for user data transfer. The PCRF 34 includes a database with network policies and charging rules.

Although FIG. 1 shows only one wireless base station 2, one MME 31, one S-GW 32, one P-GW 33, and one PCRF 34, the number of each of these may be more than one in the network as a whole. For example, the PCRF 34 may exist for each APN or for each telecommunication service provider. Transfer paths of data in the core network 3 are different for each APN. In FIG. 1, solid lines connecting the elements in the core network 3 represent the transfer paths of user data, and dashed lines represent paths of control signals.

In addition, the core network 3 may include an HLR (Home Location Register) /HSS (Home Subscriber Server) and the like. For example, names and combinations of the devices constituting the core network 3 can be appropriately changed so as to correspond to a communication standard adopted for the mobile body communication system 100, such as 5G. Also, the arrangement of functions in the core network 3 can be changed as appropriate. For example, functions provided by the PCRF 34 may be provided by another device.

Hereinafter, the devices that constitute the core network 3, such as the MME 31 and the S-GW32, are simply referred to as the core network 3, for example, when these devices are not distinguished. Each of the devices that constitute the core network 3, such as the MME 31 and the S-GW 32, corresponds to a network device. The wireless base station 2 can also be included in the network device. This is because the wireless base station 2 has a role as an interface for communication between the core network 3 and the wireless communication device 5. In the present disclosure, an expression of "network device" can be read as "at least one of the wireless base station 2 or the core network 3". The network device can include various facilities for communication between the wireless communication device 5 and the external device 4.

The automated driving management center 4A is a center that manages an operation state of the vehicle that travels by automated driving. The automated driving management center 4A is capable of performing data communication with the in-vehicle communication system 1 via the wireless base station 2 or the like. For example, the automated driving management center 4A receives a traveling state report uploaded from the in-vehicle communication system 1, and determines whether there is an abnormality in the in-vehicle communication system 1. The traveling state report is a data set that indicates a state inside the vehicle during automated driving and a state outside the vehicle during automated driving. The automated driving management center 4A may store the traveling state report transmitted from each vehicle in an operation recording device (not shown). In addition, the automated driving management center 4A may have a function of creating and distributing a medium- to long-term control plan of the vehicle Hv, such as calculation of a travel route, for the vehicle Hv.

The map server 4B is a server that distributes map data stored in a predetermined database in response to a request from the vehicle Hv. The map server 4B is capable of performing data communication with the in-vehicle communication system 1 via the wireless base station 2 or the like. The map data distributed by the map server 4B may be high definition map data or navigation map data. The high definition map data corresponds to map data indicating a road structure, position coordinates of features disposed along the road, and the like with an accuracy available for automated driving. The navigation map data is map data for navigation. The navigation map data corresponds to map data lower in accuracy than the high definition map data.

The external device 4 may be various servers/centers other than those described above. The mobile body communication system 100 may include a remote control center that remotely controls the vehicle Hv by communicating with a vehicle remote control device installed in the vehicle Hv as an example of the external devices 4. The remote control center includes a center remote control device which is a device for an operator to remotely control the vehicle Hv. The center remote control device is configured as a cockpit including, for example, a display showing a scenery around the vehicle and operation members such as a steering wheel and a pedal. The remote control center may be integrated with the above-described automated driving management center 4A. The automated driving management center 4A as the remote control center may remotely control the vehicle Hv, for example, in response to a request from an automated driving device 6A.

<Configuration of In-Vehicle Communication System 1>

The in-vehicle communication system 1 includes, for example, the wireless communication device 5, the automated driving device 6A, a navigation device 6B, and a probe device 6C, and the like. The wireless communication device 5 is connected to various in-vehicle devices 6 such as the automated driving device 6A, the navigation device 6B, and the probe device 6C via an in-vehicle network Nw. The in-vehicle network Nw is a communication network built in the vehicle Hv. Devices connected to the in-vehicle network Nw can communicate with each other. That is, the wireless communication device 5 is able to mutually communicate with each of the automated driving device 6A, the navigation device 6B, and the probe device 6C. The vehicle interior network Nw enables multiplex communication using a time division multiple access (TDMA) or the like. Note that, as multiplex communication methods, frequency division multiple access (FDMA), code division multiple access (CDMA), orthogonal frequency division multiplexing (OFDM), and the like can be adopted.

Specific devices included in the in-vehicle communication system 1 may communicate directly with each other without the in-vehicle network Nw. In FIG. 2, although a network topology of the in-vehicle network Nw is configured as a bus type, the network topology thereof is not limited to the bus type. The network topology of the in-vehicle network may be a mesh type, a star type, or a ring type, for example. As standard of the in-vehicle network Nw, various standards, such as controller area network (CAN is a registered trademark), Ethernet (registered trademark), and FlexRay (registered trademark) can be adopted. Further, a mode of connection between the wireless communication device 5 and each in-vehicle device 6 is not limited to wired connection, and may be wireless connection. The in-vehicle device 6 may be an ECU (Electronic Control Unit).

The wireless communication device 5 has multiple subscriber identity modules (hereinafter, SIMs) 55 and is capable of using multiple APNs corresponding to the respective SIMs 55. In other words, the wireless communication device 5 is capable of wirelessly communicating with the multiple external devices 4 by using multiple wireless communication services corresponding to the respective APNs. The APN corresponding to a certain SIM 55 is an APN that is available based on information of the SIM 55. The wireless communication device 5 uses different wireless communication services corresponding to the respective APNs based on a purpose of communication and a communication status. The wireless communication device 5 corresponds to an interface through which each in-vehicle device 6 communicates wirelessly with the external devices 4 as predetermined communication partners. The wireless communication device 5 as a wireless communication interface corresponds to a device executing at least one of two processes. One of the two processes is a process in which data input from the in-vehicle device 6 is transmitted to the external device 4. The other of the two processes is a process in which data received from the external device 4 is transmitted to the in-vehicle device 6. By installing the wireless communication device 5 in the vehicle Hv, the vehicle becomes a connected car that can be connected to the Internet.

The wireless communication device 5 includes a computer as a main component. The computer includes a processing unit 51, a RAM 52, a storage 53, a communication interface 54, SIMs 55, and a bus connecting them. The processing unit 51 is hardware for calculation processing, and is combined with the RAM 52. The processing unit 51 includes at least one calculation core, such as a central processing unit (CPU). The processing unit 51 executes various processes by accessing the RAM 52.

The storage 53 includes a non-volatile storage medium such as a flash memory. A communication control program is stored in the storage 53 as a program executed by the processing unit 51. Execution of the communication control program by the processing unit 51 corresponds to execution of a communication control method which is a method corresponding to the communication control program. In the storage 53, information (for example, profiles) related to the APNs to which the wireless communication device 5 is connectable is registered. The information related to the APNs includes information necessary for the wireless communication device 5 to perform data communication using a telephone line. For example, the information related to the APN includes information specifying a gateway (that is, a connection destination) that has a role as a connection window from the telephone line to the network such as the Internet.

The communication interface 54 is a circuit for communicating with the in-vehicle device 6 via the in-vehicle network Nw. The communication interface 54 is implemented using an analog circuit element, an IC, a PHY chip conforming to a communication standard of the vehicle interior network Nw. Various data such as, for example, transmission data output from the in-vehicle device 6, and vehicle speed data detected by a vehicle speed sensor are input to the communication interface 54. The transmission data here corresponds to communication traffic (in other words, data) directed to the external device 4.

Each of the SIMs 55 is an IC module in which information for identifying a contractor of a line is recorded. Each of the SIMs 55 may be an IC card, for example. For example, a unique number called IMSI (International Mobile Subscriber Identity) is recorded in each SIM 55 in association with a telephone number of the contractor. Further, the SIM 55 stores setting data related to wireless communication connection such as available frequencies and priorities of frequencies to be observed for determining a serving cell. The wireless communication device 5 of the present embodiment has a first SIM 55A and a second SIM 55B as the SIMs 55. Each SIM 55 may be inserted into a card slot (not shown) or may be an eSIM (Embedded SIM). The concept of SIM 55 here includes both a removable card type and an embedded type (i.e., eSIM).

The first SIM 55A and the second SIM 55B are issued by different communication service providers, for example. Therefore, for example, the available APN of the first SIM 55A and the available APN of the second SIM 55B are different. This configuration corresponds to a configuration having the multiple SIMs 55 which are different in available APN. The number of APNs supported by each SIM 55 may be one or more. For example, the first SIM 55A may be a SIM card tied to a carrier that provides multiple APNs. The second SIM 55B may be also a SIM card that supports multiple APNs. The wireless communication device 5 is connectable to multiple APNs by having at least multiple SIMs 55. In order to simplify the explanation here, it is assumed that each SIM 55 supports one APN. Hereinafter, an APN available by the first SIM 55A is also described as an APN_1. An APN available by the second SIM 55B is also described as an APN_2. The wireless communication device 5 may have three or more SIMs 55.

For example, the SIMs 55 are respectively different in settings for communication connections, such as the priorities of frequencies of signals to be observed at a time of specifying a serving cell and a combination of available frequencies. For example, when specifying the serving cell, the first SIM 55A is set such that signals are observed in descending order of frequencies. The second SIM 55B is set such that signals are observed in ascending order of frequencies. The first SIM 55A and the second SIM 55B may be issued by the same communication service provider as long as the settings related to the communication connections are different as described above. A communication service provider corresponding to the first SIM 55A may be a Mobile Virtual Network Operator (MVNO) that uses communication facilities provided by a communication service provider corresponding to the second SIM 55B. Here, the serving cell means the wirelessly accessing wireless base station 2 itself or a cell formed by the wireless base station 2.

The automated driving device 6A is a device that executes a part or all of the driving operations instead of the user by controlling a traveling actuator based on detection results of surrounding monitoring sensors such as an in-vehicle camera and a millimeter wave radar mounted on the vehicle. The traveling actuator includes, for example, a brake actuator as a braking device, an electronic throttle, a steering actuator, and the like. The surrounding monitoring sensors are sensors that detect an object or the like existing in the vicinity of a subject vehicle. The surrounding monitoring sensors may be, for example, a camera, a millimeter wave radar, a LiDAR (Light Detection and Ranging/Laser Imaging Detection and Ranging), or a sonar.

The automated driving device 6A sequentially transmits the traveling state report during automated driving to the automated driving management center 4A via the wireless communication device 5. The traveling state report is a data set indicating situations inside the vehicle and outside the vehicle. The situation inside the vehicle during the automated driving may include an operation state of the automated driving device 6A and a state of an occupant. The data indicating the operation state of the automated driving device 6A also includes a recognition result of the surrounding environment by the automated driving device 6A, a traveling plan, a calculation result of a target control amount of each traveling actuator. The automated driving device 6A outputs various data related to the automated driving described above to the wireless communication device 5 periodically or at a time of occurrence of a predetermined report event.

Further, the automated driving device 6A may receive real-time information (hereinafter, referred to as control support information) that serves as a reference for generating a control plan from the automated driving management center 4A by wireless communication. The control support information is, for example, information indicating the current position, movement speed, traveling direction, and the like of other mobile bodies existing around the vehicle Hv. The control support information may include, for example, information related to semi-dynamic map elements such as positions of sections with traffic restriction, end positions of traffic jams, positions of fallen objects on the road. In that case, the wireless communication device 5 receives data including the control assistance information from the automated driving management center 4A and outputs it to the automated driving device 6A. A data set as the control assistance information corresponds to one example of vehicle control data. Further, the automated driving device 6A corresponds to a vehicle control device.

The navigation device 6B is an in-vehicle device 6 that cooperates with an HMI (Human Machine Interface) system including a display to perform route guidance that guides the occupant along a route to a destination set by the occupant. The navigation device 6B executes a route guidance process using map data downloaded from the map server 4B, for example. The wireless communication device 5 downloads map data corresponding to the current position of the vehicle Hv or a traveling schedule route from the map server 4B in response to a request from the navigation device 6B, and then provides the map data to the navigation device 6B.

The probe device 6C is a device that generates probe data which is data for the map server 4B to generate and update the map data using detection results of the surrounding monitoring sensors. The probe device 6C uploads the prove data to the map server 4B via the wireless communication device 5. For example, the probe device 6C periodically transmits the probe data to the map server 4B as a data set indicating observation positions of features identified by the surrounding monitoring sensors. The probe data corresponds to packaged data of recognition results of lane markings, road signs, traffic signals, and other landmarks within a certain time period (for example, 400 ms). The probe data may include, for example, transmission source information, traveling track information, traveling road information, and feature information. The traveling track information indicates a track on which the vehicle Hv has traveled. The feature information indicates observation coordinates of features such as landmarks. Further, the probe data may include vehicle behavior information such as vehicle speed, steering angle, yaw rate, turn signal operation information, and wiper operation information.

Devices corresponding to the in-vehicle devices 6 are not limited to those exemplified above. Various in-vehicle devices 6 can be directly or indirectly connected to the wireless communication device 5. For example, the in-vehicle devices 6 can include a driving assistance device, a driving recorder, an emergency call device, and a self-diagnostic device (so-called OBD which is abbreviation for OnBoard Diagnostics).

Further, the vehicle Hv may also be remotely operated by the operator existing at the remote control center. The in-vehicle communication system 1 may include, for example, the vehicle remote control device as the in-vehicle device 6. When the vehicle Hv is remotely controlled, the wireless communication device 5 promptly receives data for the remote control transmitted from the remote control center and then provides it to the vehicle remote control device. The vehicle remote control device controls the behavior of the vehicle Hv by outputting control signals to various traveling actuators based on signals from the remote control center. Further, the vehicle remote control device outputs image data, such as images captured by an in-vehicle camera, and sensor data indicating the traveling state, such as vehicle speed, to the wireless communication device 5 as data to be transmitted to the remote control center. The vehicle remote control device may be integrated with the automated driving device 6A. The vehicle control data includes the data for the remote control transmitted from the remote control center, and the images captured by the in-vehicle camera and transmitted to the remote control center. Each in-vehicle device 6 transmits and receives various types of data multiplexed by a predetermined method to and from the wireless communication device 5.

<Functions of Wireless Communication Device 5>

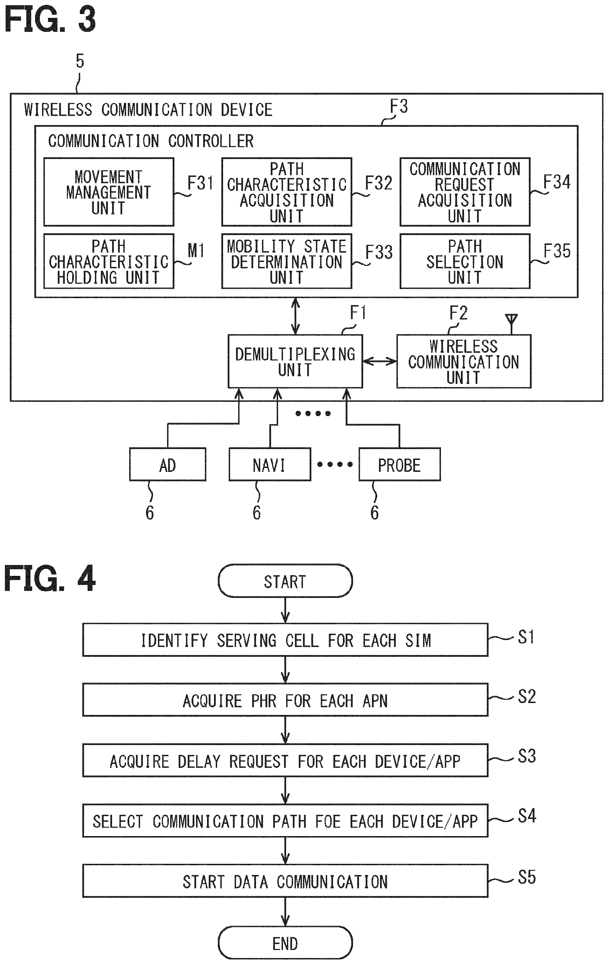

Here, functions and operations of the wireless communication device 5 will be described. As shown in FIG. 3, the wireless communication device 5 includes a demultiplexing unit F1, a wireless communication unit F2, and a communication controller F3.

The demultiplexing unit F1 receives data generated by each in-vehicle device 6 and outputs the data to the wireless communication unit F2. In addition, the demultiplexing unit F1 outputs data received by the wireless communication unit F2 to an in-vehicle device 6 to which the data is to be transferred. For example, the demultiplexing unit F1 acquires original data by demultiplexing the multiplexed data input from each in-vehicle device 6 using a predetermined method. The demultiplexing unit F1 includes a buffer which is a storage area for temporarily holding data input from each in-vehicle device 6 until the data is wirelessly transmitted to the wireless base station 2. The buffer may be provided by a rewritable storage medium such as RAM. The demultiplexing unit F1 also has a function of monitoring the amount of data retained in the buffer and information stored in headers of data retained in the buffer.

The data stored in the buffer are sequentially retrieved by the wireless communication unit F2 and transmitted to the external device 4 which is a destination of a communication path according to the data input source (that is, the in-vehicle device 6). The communication path here corresponds to each APN. A communication path can be read as a wireless communication service. An allocation state of the APN as the communication path for each in-vehicle device 6 is controlled by the communication controller F3. Here, the communication controller F3 controls the wireless data communication paths in units of in-vehicle device 6. However, the present disclosure is not limited to this control. The wireless communication device 5 may switch the wireless communication paths in units of application software. A method of allocating the wireless communication paths for the respective in-vehicle devices 6 will be described later.

The wireless communication unit F2 is a communication module that has a role of a physical layer in a wireless communication protocol such as LTE, for example. The wireless communication unit F2 includes an antenna that can transmit and receive radio waves in a frequency band used in LTE, and a transceiver that executes signal processing equivalent to conversion from baseband signals to highfrequency signals and vice versa in accordance with LTE communication standard. The wireless communication unit F2 may have multiple antennas for reception diversity and the like. The wireless communication unit F2 generates a carrier wave signal corresponding to input data by executing processes such as encoding, modulation, and digital-to-analog conversion on the data input from the demultiplexing unit F1. The wireless communication unit F2 outputs the generated carrier wave signal to the antenna to be radiated as the radio waves. Further, the wireless communication unit F2 executes a predetermined process on a reception signal received by the antenna, thereby converting it into a series of information (i.e., digital data) represented by digital values. The predetermined process may include an analog-to-digital conversion process and a demodulation process. Then, the wireless communication unit F2 outputs data corresponding to the reception signal to the demultiplexing unit F1.

The communication controller F3 monitors and controls the communication state of the wireless communication service corresponding to each APN. The communication controller F3 transmits an attach request for each SIM 55 to the MME 31, for example, when a vehicle power source is turned on. Further, the communication controller F3 notifies the MME 31 of the APN registered in each SIM 55 in response to a request from the MME 31, and thereby builds the PDN connection for each APN. The MME 31 establishes the PDN connection including a wireless bearer in cooperation with the S-GW and the P-GW in response to the APN notified from the wireless communication device 5. Hereinafter, for convenience, the wireless base station 2 to which the wireless communication device 5 is connected based on the information of the SIM 55 is also referred to as a connection station. The connection station, in other words, corresponds to the wireless base station 2 forming the serving cell. The vehicle power source here may be an accessory power source or a power source for traveling. The power source for traveling is a power source used for traveling of the vehicle Hv. When the vehicle Hv is a gasoline vehicle, the power source for traveling is also called an ignition power source. When the vehicle Hv is an electric vehicle or a hybrid vehicle, the power source for traveling refers to a system main relay.

Further, the communication controller F3 includes, as functional units, a movement management unit F31, a path characteristic acquisition unit F32, a transmission power control unit F33, a communication request acquisition unit F34, and a path selection unit F35. Further, the communication controller F3 includes a path characteristic holding unit M1 implemented using a rewritable storage medium such as the RAM 52, for example.

The movement management unit F31 specifies the serving cell corresponding to each APN specified by each SIM 55 and executes cell movement management. The movement management unit F31 calculates RSRP, RSSI, and RSRQ for each cell as indices for selecting the serving cell. The RSRP is an abbreviation for Reference Signal Received Power. The RSRP is an average received power of RSs in single resource elements. The average received power corresponds to an average value of received power observed within a predetermined period. Specifically, the RSRP is determined as the linear average of the reception power (W) of the resource elements carrying the RS. Calculation of the RSRP is performed in cooperation with the wireless communication unit F2. The RSRP may be an average received power of CRSs or an average received power of CSI-RSs (so-called CSI-RSRP).

The RSSI is an abbreviation for Received Signal Strength Indicator. The RSSI is a value obtained by measuring a power of an entire LTE system band in an OFDM symbol that carries the RS. In general, resource allocation increases and the RSSI tends to increase with increase in data traffic. The RSRQ is an abbreviation for Reference Signal Received Quality. The RSRQ is an index indicating a received quality of RS. The larger RSRQ, the better received quality. The RSRQ represents a ratio between the received power of the cell-specific reference signal and a total power within a measurement bandwidth. Specifically, the RSRQ is obtained by dividing a value obtained by multiplying the RSRP by the number of resource blocks by the RSSI. A method disclosed in Non-Patent Literature 1 can be used as a specific calculation method for the RSRP, the RSSI, and the RSRQ.

Then, the movement management unit F31 executes a process for switching the serving cell as necessary, based on an index such as RSRP for each cell corresponding to each SIM 55. A cell corresponding to a certain SIM 55 refers to a wireless base station that can be connected based on the information of the SIM 55 and its cell. The wireless communication device 5 and the network device cooperate to switch the serving cell. For example, when the wireless communication device 5 is in an idle mode, the wireless communication device 5 leads and switches the serving cell. Further, when the wireless communication device 5 is in a connected mode, the network device leads and switches the serving cell. The details of the transition control of the serving cell can be changed as appropriate, and the method described in Non-Patent Literature 1 or the like can be adopted.

The path characteristic holding unit M1 temporarily holds information that is RSRP and RSRQ and the like for each cell corresponding to each SIM 55 calculated by the movement management unit F31. The information held by the path characteristic holding unit M1 is updated as needed.

The path characteristic acquisition unit F32 acquires parameters related to communication settings for each APN that can be used with the SIM 55 from the network device. The communication setting parameters for each APN include an allocation frequency, presence or absence of bandwidth guarantee, priority of packet transfer, delay characteristic setting value (hereinafter, also referred to as delay threshold or dT), and the like. The allocation frequency, delay characteristic setting value, and the like correspond to elements indicating the QoS of the communication path determined by the APN. The communication setting parameters acquired by the path characteristic acquisition unit F32 are stored, for example, in the path characteristic holding unit M1. The parameter group acquired by the path characteristic acquisition unit F32 corresponds to path characteristic information indicating characteristics of each wireless communication service corresponding to each APN.

The delay characteristic setting value is one parameter used for communication control, and is determined by the PCRF 35 at the time of communication connection between the wireless communication device 5 as the UE and the core network 3, for example. For example, at least one of the MME 31 or the wireless base station 2 notifies the wireless communication device 5 of the delay characteristic setting value determined by the PCRF 35. The delay characteristic setting value for each APN is provided by, for example, the PCRF 35 corresponding to each APN. The delay characteristic setting value may be determined by the wireless base station 2 based on information received from the core network 3 and distributed.

The delay characteristic setting value is a parameter for the UE to verify whether transmission delay of communication packets occurs at a level beyond an expected range of delay time. In one aspect, the delay characteristic setting value corresponds to an upper limit value of the expected range of delay time of communication packets. A larger delay characteristic setting value means a larger expected communication delay time. An APN with a smaller delay characteristic setting value has a smaller allowable delay amount, that is, an APN has a higher real-time property. Here, the APN can be read as a communication path or a wireless communication service.

Further, the path characteristic acquisition unit F32 evaluates the QoS of each communication line corresponding to each APN based on communication setting parameters such as, for example, the allocation frequency, which are acquired from the network device. In addition, the path characteristic acquisition unit F32 may measure the communication speed for each communication line corresponding to each APN. Further, the path characteristic acquisition unit F32 may evaluate QoS for each communication line corresponding to each APN based on the measurement value of the communication speed. That is, the path characteristic acquisition unit F32 may evaluate the QoS for each APN based on at least one of the communication setting parameter acquired from the network device or the communication speed observation value. The communication line here corresponds to a wireless communication service. In one aspect, the path characteristic acquisition unit F32 can be understood as a service quality evaluation unit that evaluates QoS for each wireless communication service. The path characteristic acquisition unit F32 may be integrated with the movement management unit F31.

The transmission power control unit F33 controls transmission power in the wireless communication unit F2 for each wireless communication service (actually, communication line) corresponding to each APN. For example, the transmission power is determined based on a path loss (hereinafter also referred to as PL) estimated from the downlink. For example, the transmission power control unit F33 determines a transmission power setting value PPUCSH based on the following first equation.

[First Equation]

$$P_{PUSCH} = min\{P_{CMAX}, 10log_{10}(M_{PUSCH}) + P_{O\_PUSCH} + \alpha \cdot PL + \Delta_{TF} + f\} \quad \cdots (1)$$

The "PCMAX" in the first equation is a maximum transmission power of the wireless communication device 5 and is a preset value. The "MPUSCH" represents a transmission bandwidth of an uplink shared channel (hereinafter referred to as PUSCH: Physical Uplink Shared Channel). The "PO_PUSCH" is a value preset by the wireless base station 2. The "PL" represents a path loss level measured by the wireless communication device 5. The path loss can be calculated based on a difference between the CRS transmission power notified from the network device and the CRS reception power observed by the wireless communication device 5. The "$\alpha$" is a weighting factor indicating a path loss compensation ratio, and is preset by the wireless base station 2. The "$\Delta$TF" is an offset value according to a modulation scheme and coding rate (so-called MCS: Modulation and channel Coding Scheme) of transmission data, and is a parameter notified from the wireless base station 2. The "f" represents the sum of transmission power adjustment values instructed by the wireless base station 2 in the past.

Note that the transmission power (PPUSCH) may be calculated for each subframe and take different values for each subframe. Further, scheduling information such as "MPUSCH", "$\Delta$TF", "f", "PO_PUSCH" and "$\alpha$" included in the first equation may be set independently for each CC (Component Carrier) in CA (Carrier Aggregation). The transmission power value set, for each APN, by the transmission power control unit F33 is output to the wireless communication unit F2. The wireless communication unit F2 transmits wireless signals with the transmission power instructed by the transmission power control unit F33.

Further, the transmission power control unit F33 calculates a power headroom (hereinafter referred to as PHR: Power Headroom), which is a surplus of transmission power, for each wireless communication service corresponding to each APN. The PHR is a parameter representing a difference between the current transmission power setting value and the maximum transmission power in PUSCH. For example, the PHR can be determined based on the following second equation.

[Second Equation]

$$PHR = P_{CMAX} - \left\{ 10log_{10}(M_{PUSCH}) + P_{O\_PUSCH} + \alpha \cdot PL + \Delta_{TF} + f \right\} \quad \cdots (2)$$

Note that the same parameters in the second equation as those in the first equation refer to the same parameters. As a determination method of the transmission power and a calculation method of the PHR, methods of Non-Patent Literature 1, its latest version, and the latest can be used.

The transmission power control unit F33 calculates the PHR and reports the calculated PHR to the wireless base station 2 at each predetermined cycle predetermined by the wireless base station 2 or when a predetermined event occurs. The PHR calculation event includes, for example, a case where the PL fluctuates beyond a threshold. The communication controller F3 rounds the PHR calculated by the transmission power control unit F33 to the nearest integer in the range of -23 dB to 40 dB before reporting it to the network device. For example, when the calculated PHR value is -23 dB or more and less than -22 dB, it is reported as "POWER_HEADROOM 0". Further, when the calculated value of PHR is -22 dB or more and less than -21 dB, it is reported as "POWER_HEADROOM_1". When the calculated PHR is equal to 40 dB or more, it is reported as "POWER_HEADROOM_63". That is, the PHR can be expressed in 64 levels. The PHR calculated and reported by the transmission power control unit F33 can be used in the wireless base station 2 for allocation of uplink transmission opportunities to the wireless communication device 5, and the like.

The magnitude of the PHR is determined by geographical factors such as the distance from the wireless base station 2 and the presence of obstacles such as, for example, buildings that block the propagation of radio waves. Therefore, when the wireless communication device 5 is near the wireless base station 2, the PHR tends to be relatively large. Also, the PHR tends to be small near the edge of the cell because the path loss becomes large. Naturally, as the position becomes closer to the wireless base station 2, the better communication environment for the wireless communication device 5 can be expected. That is, the PHR can also function as an index that indirectly indicates the quality of the communication environment. The transmission power control unit F33 corresponds to a remaining power calculation unit.

The communication request acquisition unit F34 acquires a delay request which is a request quality related to data transmission delay from each in-vehicle device 6. The delay request is expressed, for example, by a numerical value (hereinafter, referred to as a delay allowable value) indicating an allowable delay time for the in-vehicle device 6. The delay allowable value can be set to a numerical number indicating a length of time such as, for example, 100 milliseconds. A smaller delay allowable value indicates that immediacy is required. The communication request acquisition unit F34 corresponds to a delay allowable amount acquisition unit. The delay allowable value corresponds to a delay allowable amount.

A length of the allowable delay time may be expressed in terms of levels. For example, a delay allowable level representing the length of the allowable delay time may be expressed in four stages of first to fourth levels. Even when the length of allowable delay time is expressed in terms of levels, the allowable delay time becomes shorter as the level number becomes smaller. For example, the first level corresponds a delay request in which a delay time is required to be less than 100 milliseconds, and the second level corresponds to a delay request in which the delay time is required to be 300 milliseconds or less. Further, the third level corresponds a delay request in which a delay time is required to be less than 1000 milliseconds, and the fourth level corresponds to a delay request in which the delay time is allowed to be 1000 milliseconds or more.

The delay request of each in-vehicle device 6 is input to the wireless communication device 5 from, for example, the in-vehicle device 6, as a predetermined control signal. For example, the in-vehicle device 6 is connected to the wireless communication device 5 to communicate each other when the vehicle power source is turned on. When the communication connection is established, the in-vehicle device 6 may notify the wireless communication device 5 of the delay request. Alternatively, the in-vehicle device 6 may notify the wireless communication device 5 of the delay request based on, in the in-vehicle device 6, the occurrence of communication traffic (in other words, transmission data) for the external device 4. The delay request may be specified for each communication traffic. Note that the delay request may be acquired by the wireless communication device 5 inquiring of each in-vehicle device 6 related to the delay request at a predetermined timing or periodically. In addition, the delay request may be written in a header of data transmitted from each in-vehicle device 6 to the wireless communication device 5. The delay request may be set for each application software that the in-vehicle device 6 is executing.

In addition, the communication request acquisition unit F34 acquires a parameter related to a mode of communication with the external device 4 from each in-vehicle device 6. The parameter is different from the delay allowable value. For example, the communication request acquisition unit F34 acquires the upper limit value of an allowable packet error rate, a resource type related to the bandwidth guarantee, and the like. The resource type related to the bandwidth guarantee includes, for example, whether the bandwidth is guaranteed. Note that parameters such as the upper limit value of the packet error rate and the resource type may be acquired from the core network 3. In addition, the resource type or the upper limit value of the packet error rate may be determined by the communication request acquisition unit F34 based on the type of data input from the in-vehicle device 6, and the like.

The path selection unit F35 selects the wireless communication path used for data communication of each in-vehicle device 6 based on the PHR calculated by the transmission power control unit F33 and the real-time property of the data communication requested by each in-vehicle device 6. The path selection unit F35 corresponds to a communication path selection unit. Details of the operation of the communication controller F3 will be described later.

<Wireless Communication Path Allocation Process>

Here, a path selection process executed by the wireless communication device 5 will be described with reference to a flowchart of FIG. 4. Note that the flowchart of FIG. 4 is executed sequentially at predetermined intervals, such as, for example, every 4 seconds or 10 seconds. Alternatively, the flowchart of FIG. 4 may be executed in response to the occurrence of a predetermined event such as, for example, a case where the vehicle Hv stops or a handover is performed by the movement management unit F31. Further, the flowchart may be triggered in response to an input of data to be transmitted to the external device 4 or a request of the communication with the external device 4 from at least one of multiple in-vehicle devices 6. The path selection process corresponds to a process for updating the allocation state of the wireless communication service (in other words, APN) for each in-vehicle device 6.

Here, for simplicity of explanation, a case where the wireless communication device 5 is capable of using two APNs including the APN_1 and APN_2 will be described as an example. The APN_1 is an APN corresponding to the first SIM 55A, and the APN_2 is an APN corresponding to the second SIM 55B.

First, in step S1, the movement management unit F31 executes movement management process which is a process related to reselection of the serving cell. For example, the movement management unit F31 determines whether the cell reselection is necessary based on the RSRP and RSRQ, priority of allocation frequencies, and the like of each cell corresponding to the SIM 55. When, based on the RSRP and the like, there is a cell that can be expected to have better communication quality than the current serving cell, the cell reselection is performed in cooperation with the network device. Also when there is a cell to which the frequency having the priority higher than that of the serving cell is allocated, similarly, the reselection may be performed. That is, the movement management unit F31 compares the communication qualities of the serving cell and the surrounding cell or the like, and performs the cell reselection when there is a cell that satisfies a specific condition. Note that the movement management process may include a process of transmitting a RRC message for the cell reselection to the network device or the like. The S1 corresponds to a movement management step.

In step S2, the transmission power control unit F33 adjusts the transmission power in the wireless communication service corresponding to each APN by the method described above. Further, the PHR of the wireless communication service corresponding to each APN is calculated. The PHR may differ for each SIM 55 and furthermore each APN. That is, in step S2, each of the PHR of the serving cell corresponding to the APN_1 and the PHR of the serving cell corresponding to the APN_2 is calculated. For convenience, the PHR of the serving cell corresponding to APN_1 is described as PHR_1, and the PHR of the serving cell corresponding to APN_2 is described as PHR_2. For example, the PHR_1 is +25 dB and the PHR_2 is +5 dB. These numerical values are one example for explaining the operation of the wireless communication device 5 and can be changed dynamically. When the process in step S2 is completed, the process proceeds to step S3. The step S2 corresponds to a remaining power calculation step. Note that the step S2 can also be called a transmission power control step.

In step S3, the communication request acquisition unit F34 acquires the delay allowable value from each in-vehicle device 6. Hereinafter, for convenience, a delay allowable value of the automated driving device 6A is referred to as DA_A, a delay allowable value of the navigation device 6B is referred to as DA_B, and a delay allowable value of the probe device 6C is referred to as DA_C. In one example, the delay allowable value as the delay request of each in-vehicle device 6 is set to a value having a relationship of DA_A < DA_B < DA_C. For example, DA_A of the delay allowable value of the automated driving device 6A may be set at 100 milliseconds. DA_B of the delay allowable value of the navigation device 6B can be set to a value of, for example, 500 milliseconds which is relatively larger than DA_A of the delay allowable value of the automated driving device 6A. DA_C of the delay allowable value of the probe device 6C may be set to, for example, 2000 milliseconds. Note that the numerical values described above are examples and can be changed as appropriate. The step S3 corresponds to a delay allowable amount acquisition step.

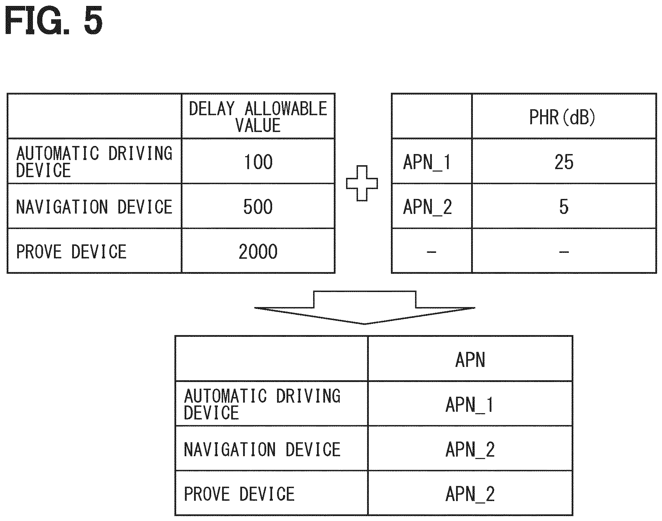

In step S4, the path selection unit F35 selects a wireless communication path for each in-vehicle device 6. The APN with the large PHR is preferentially allocated to the in-vehicle device 6 having the small delay allowable value. For example, as illustrated in FIG. 5, the path selection unit F32 allocates the APN_1 which has the largest PHR among the APNs to the automated driving device 6A which has the smallest allowable delay value among the in-vehicle devices 6. As a result, the communication between the automated driving device 6A and the automated driving management center 4A is performed through the wireless communication path corresponding to the APN_1. The path selection unit F32 allocates the APN_2 which has a relatively small PHR to the navigation device 6B and the probe device 6C which have a relatively large delay allowable value. As a result, each of the navigation device 6B and the probe device 6C communicates with the external device 4 through the wireless communication path corresponding to the APN_2. Allocating a certain APN to a certain device corresponds to allocating a wireless communication service corresponding to the APN as a communication path of the device.

When the wireless communication path corresponding to the APN_1 has an available capacity in terms of communication speed while the APN_1 being allocated to the automated driving device 6A, the path selection unit F32 may allocate APN_1 to the navigation device 6B. One APN may be allocated to multiple in-vehicle devices 6 in a range where the communication speed is kept above an acceptable level. For example, multiple in-vehicle devices 6 may be allocated to the APN_1. The step S4 corresponds to a communication path selection step.

In step S5, the communication controller F3 notifies the wireless communication unit F2 of the wireless communication paths (i.e., APNs) that have been allocated to the respective in-vehicle devices 6 in step S2. In response to this notification, the wireless communication unit F2 applies the wireless communication paths to the respective in-vehicle devices 6. Thereby, data input from the respective in-vehicle devices 6 are transmitted via the wireless communication paths (i.e., APNs) allocated to the input sources. In this example, the communication paths that have been allocated to the respective in-vehicle devices 6 in step S4 are immediately applied. However, the present disclosure is not limited to this. For example, the actual change of the communication path in step S5 may be put on hold until the vehicle Hv stops or the communication between the automated driving device 6A and the automated driving management center 4A is completed. Further, as described above, the fact that the vehicle Hv has stopped may be used as an execution trigger for the path selection process. According to the configuration in which the path selection process is triggered by the stop of the vehicle Hv, it is possible to change the allocation state of the wireless communication service for each in-vehicle device 6 while the communication environment is stable. Further, it can be expected that the case of stopping is, for example, waiting for a traffic light at an intersection. When the vehicle stops waiting for a signal, the communication quality at the time of determining the path assignment is maintained for a relatively long time such as, for example, 10 seconds. Therefore, it is possible to improve communication efficiency. For example, it is possible to expect the effect capable of efficiently transmitting transmission data that has been retained in the buffer of the wireless communication unit F2 while the vehicle is traveling.

<Effects of above configuration>

In the above configuration, in a configuration in which wireless communication services corresponding to multiple APNs are used in parallel for the entire vehicle, the allocation of the communication path for each in-vehicle device 6 is determined according to the PHR for each wireless communication service. That is, the path selection unit F35 allocates an APN with a large PHR to the in-vehicle device 6 that requires relatively low delay communication.

Here, the small PHR suggests, for example, a high possibility that all the data cannot be transmitted immediately when communication traffic increases rapidly, such as when transmission data having a large size is input from the in-vehicle device 6. In other words, the small PHR suggests that communication delays are likely to occur. Paradoxically, the large PHR suggests that communication delays are less likely to occur even when the traffic increases rapidly.

The present disclosure has been created by focusing on the above cause-and-effect relationship, and by preferentially allocating the APN with a large PHR to the in-vehicle device 6 with the small delay allowable amount, it is possible to reduce the risk that the actual delay time deviates from the maximum delay time required by the in-vehicle device 6. In other words, it is possible to execute the highly urgent data communication with the low delay. The above configuration corresponds to a configuration for allocating a communication path for each in-vehicle device 6, in other words, for each data communication, using PHR as an index of communication speed.

The highly urgent/high immediacy data communication is, for example, data communication that requires a maximum delay time to be 100 milliseconds or less. For example, the highly urgent data communication corresponds to a data communication for a vehicle control, such as an automated driving control, a driving assistance control, and a remote control, or a data communication related to operation management of the automated driving vehicle. That is, data input from the automated driving device 6A, a driving assistance device, and the vehicle remote control device have a high degree of necessity to be transmitted at low communication delay. The automated driving device 6A, the driving assistance device, the vehicle remote control device, and the like correspond to the vehicle control device.

Further, data communication with low urgency includes communication related to transmission and reception of map data, communication for uploading probe data to the map server 4B, transmission and reception of software update programs, and the like. In a configuration in which an audio equipment installed in the vehicle Hv acquires music data from a cloud server and reproduces it, communication for downloading the music data can also be said to be the data communication with low urgency. However, even in data communication related to multimedia such as the music data and video data, user convenience may be impaired when music or video stops in the middle. Therefore, the data communication related to the multimedia corresponds to data communication that requires a higher degree of immediacy than the communication for transmitting and receiving the probe data or the map data.

By the way, in the comparative configuration in Patent Literature 1, four or more parameters such as the number of multipaths are combined to score the expected value of the communication speed for each communication medium, and the medium for the vehicle to communicate with the external device is selected. That is, in the comparative configuration, a computational load for score calculation is placed on a processor. In contrast, in the configuration of the present disclosure, a communication path is set for each in-vehicle device 6 according to the PHR of the serving cell corresponding to each APN. Therefore, according to the configuration of the present disclosure, an effect that a calculation load can be reduced as compared to the configuration disclosed in Patent Literature 1 can be expected.

In addition, the comparative configuration does not mention a configuration in which multiple wireless communication services are used in parallel. Of course, in the configuration of the Patent Literature 1, when it is necessary to parallelly execute multiple types of data communication with different requests for the communication delay time or the like, it may not be possible to use multiple communication services according to the respective types of the data communications in parallel. On the other hand, according to the configuration of the present disclosure, the communication paths can be allocated according to delay requests of the respective in-vehicle devices 6. By allocating the communication paths according to the delay requests to the respective in-vehicle devices 6, it is possible to reduce a total of delay time exceeding allowable ranges of the respective in-vehicle devices 6, in the entire system including multiple in-vehicle devices 6. In other words, it is possible to improve the communication efficiency of the entire in-vehicle communication system 1.

While one embodiment of the present disclosure has been described above, the present disclosure is not limited to the embodiment described above, and various modifications to be described below are included in the technical scope of the present disclosure, and may be implemented by various modifications within a scope not departing from the spirit of the present disclosure, in addition to the modifications to be described below. For example, various modifications to be described below may be executed in combination as appropriate within a scope of the present disclosure that does not cause technical inconsistency. The components having the same functions as those described in the embodiment described above are denoted by the same reference symbols, and description of the same components will be omitted. When only a part of a configuration is described, the other parts of the configuration may employ a preceding configuration described in the embodiment.

For example, the path selection unit F35 may operate the top APN or the top two APNs in the RSRP as APNs dedicated to the data communication for the vehicle control. An in-vehicle device 6 that handles vehicle control data is, for example, the automated driving device 6A or the vehicle remote control device. This configuration corresponds to a configuration in which the path selection unit F32 operates one or more of multiple APNs available to the vehicle Hv as APNs dedicated to the data communication for the vehicle control. According to the above configuration, it is possible to further reduce the delay time of data communication for vehicle control. Furthermore, in the configuration described above, since a communication line for vehicle control is independent of a communication line for multimedia, it is possible to reduce a risk of delay in data communication for vehicle control. In particular, data communication related to remote control of the vehicle has very strict requirements for delay, and it may be preferable to provide redundancy in the communication path. Based on these circumstances, when the in-vehicle communication system 1 includes the vehicle remote control device and the remote control function is activated, the path selection unit F35 operates the top two APNs in the PHR as APNs dedicated to the vehicle remote control device. According to the configuration, it is possible to reduce the delay while providing the redundancy to the communication path related to the remote control.

Further, in the above, in order to simplify the explanation, the case where one SIM 55 supports only one APN is exemplified, but the present disclosure is not limited to this. For example, one SIM 55 may support multiple APNs. Specifically, the first SIM 55A may be a SIM 55 that enables the wireless communication device 5 to use two APNs of APN_1a and APN_1b. The second SIM 55B may be a SIM 55 that enables the wireless communication device 5 to use two APNs of APN_2a and APN_2b.

Since primary cells as serving cells corresponding to the respective APNs associated with one SIM 55 are common, PHRs of the APNs derived from the same SIM 55 can be basically at the same level. When the wireless communication device 5 has the SIM 55 that supports multiple APNs, it is preferable to evaluate the relative merits of the communication speed based on indicators other than the PHR indicating the communication speed for each APN, and allocate the communication path for each in-vehicle device 6 to the APN associated with the SIM 55. The index indicating the communication speed for each APN is, for example, the allocation frequency, a delay characteristic setting value, the priority of a packet transfer, and the like.

According to the configuration that estimates the expected value of the communication speed for each APN by using the delay characteristic setting value for each APN or the like in addition to the PHR, even when there are multiple APNs with the same level of PHR, the APN allocation can be properly implemented for each in-vehicle device 6. Note that the primary cell here refers to a base station serving as a center for exchanging physical layer control signals. Further, here, the expression "the same level" is not limited to being exactly the same. For example, APNs with the same level of PHR can include APNs with a PHR difference of, for example, within 5 dB.

For example, the path selection unit F35 may use both the PHR and the delay characteristic setting value to rank the communication speed for each APN and determine the APN for each in-vehicle device 6. The delay characteristic setting value for each APN can be acquired by the path characteristic acquisition unit F32. Specifically, the path selection unit F35 first ranks the communication speed of each APN by PHR. When there are multiple PHRs with the same level, the path selection unit F35 executes further detailed ranking using the delay characteristic setting value. Then, an APN with a higher assumed communication speed is preferentially allocated to the in-vehicle device 6 with a smaller delay allowable value.

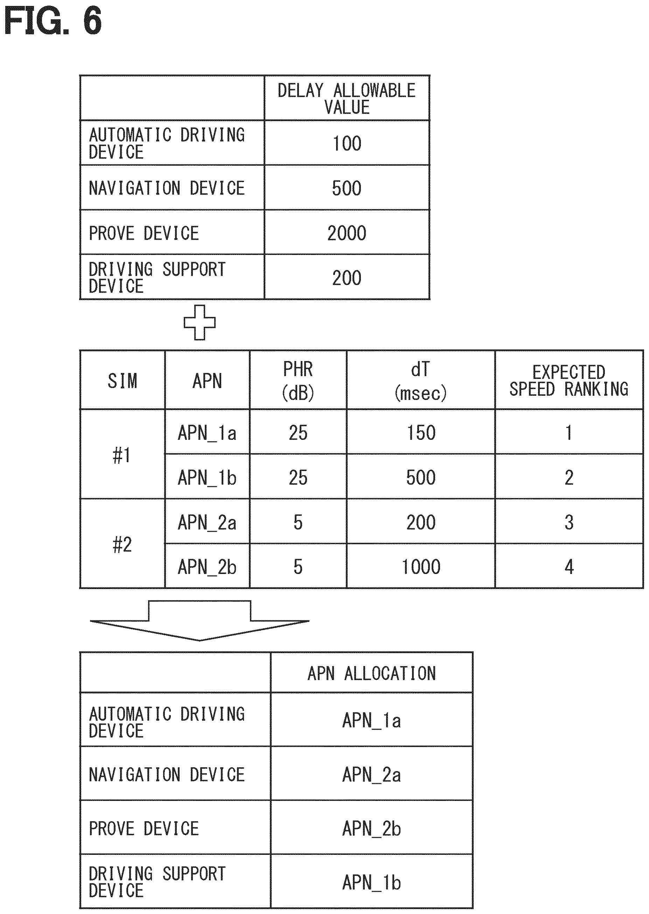

FIG. 6 is a diagram showing an operation example of the path selection unit F35 when determining the APN for each in-vehicle device 6 using both the PHR and the delay characteristic setting value. As shown in FIG. 6, when the PHRs of APN_1a and APN_1b are at the same level and the delay characteristic setting value of the APN_1a is smaller than the delay characteristic setting value of the APN_1b, the path selection unit F35 determines that the APN_1a has the higher communication speed. In FIG. 6, the smaller a numerical value in column of ranking of communication speeds, the higher an expected value of the communication speed.

Such a configuration can be interpreted to be a configuration that ranks the expected values of the communication speed for each APN by more preferentially using the PHR than the delay characteristic setting value and determines the APN for each in-vehicle device 6. Further, the above configuration corresponds to a configuration in which, when there are multiple APNs with the same PHR level, an APN with the smaller delay characteristic setting value among them is preferentially allocated to the in-vehicle device 6 with the smaller delay allowable amount.

Of course, in another aspect, the path selection unit F35 may rank the expectation values of the communication speed for each APN by more preferentially using the delay characteristic setting value than the PHR. In that case, the ranking positions of APN_1b and APN_2a in FIG. 6 are switched. That is, when ranking the communication speed for each APN, first, the path selection unit F35 may perform the ranking in the viewpoint from the delay characteristic setting value. When there are multiple APNs with the delay characteristic setting values at the same level, the path selection unit F35 may perform the ranking using the PHR.

Further, the path selection unit F35 may determine the APN allocation for each in-vehicle device 6 based on a value of a frequency allocated to each APN and the PHR. The path characteristic acquisition unit F32 may acquire the allocation frequency for each APN. For example, the path selection unit F35 ranks the expected communication speeds for respective APNs in consideration of both the PHR and the frequency, and then allocates an APN having a relatively high expected communication speed to an in-vehicle device 6 having a relatively small delay allowable amount. Here, when there are multiple APNs with the same PHR level, it is determined that the lower the allocation frequency among them, the higher the expected communication speed.

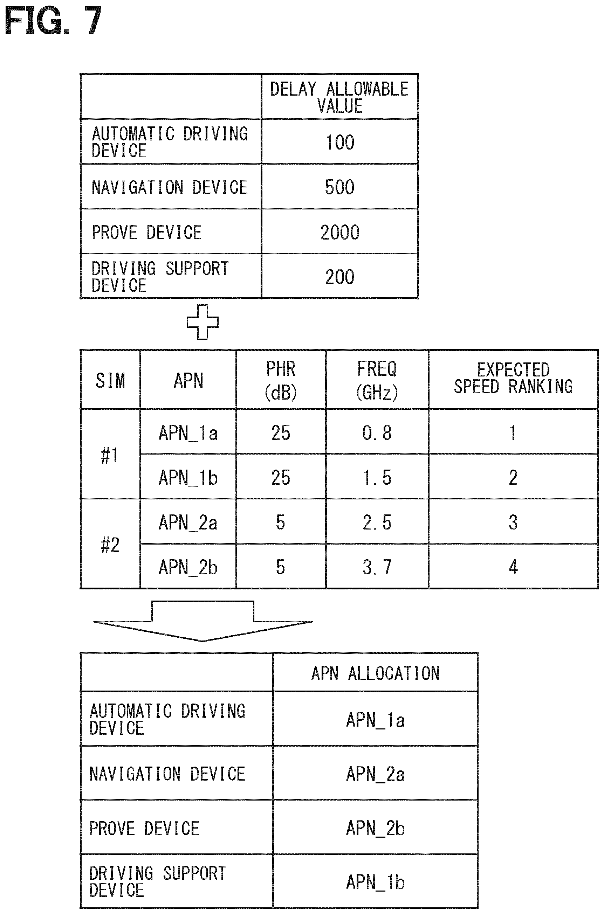

That is, for example, when there are two or more APNs at the same level of the PHR, the path selection unit F35 may allocate an APN having a relatively low allocation frequency among them to an in-vehicle device 6 having a relatively small delay allowable amount. Specifically, as shown in FIG. 7, when the PHRs of APN_1a and APN_1b are at the same level and the frequency allocated to the APN_1a is smaller than the allocation frequency of the APN_1b, it is determined that the APN_1a has the higher communication speed. In FIG. 7, similarly to FIG. 6, the smaller a numerical value in column of ranking of communication speeds, the higher the expected value of the communication speed.

In the above configuration, the reason why the APN with the small allocation frequency is considered to have a higher communication speed than an APN with a relatively high allocation frequency is as follows. Generally, when the communication environment is stable, the communication speed becomes higher with increase in frequency. However, since a vehicle moves at a relatively high speed as compared with a pedestrian or the like, the degree of change in position relative to the wireless base station 2 is large. The communication speed is more susceptible to fluctuations in the communication environment with increase in frequency. Therefore, in a technical field of the wireless communication between the vehicle and the external device, overall communication speed may decrease with increase in frequency.

The above path selection unit F35 has been created by focusing on the above difficulty, and when there are two or more APNs at the same level of the PHR, the path selection unit F32 executes path selection such that an APN having a relatively low allocated frequency among them is regarded as an APN having a relatively high communication speed. According to this configuration, although the vehicle positional relationship with the wireless base station 2 is likely to change, the path selection unit F32 can appropriately allocate a communication path to each in-vehicle device 6. The above configuration corresponds to a configuration that estimates the communication speed for each APN using the allocation frequency in addition to the PHR, and preferentially allocates an APN expected to have a relatively high communication speed to the in-vehicle device 6 having a relatively small delay allowable amount.

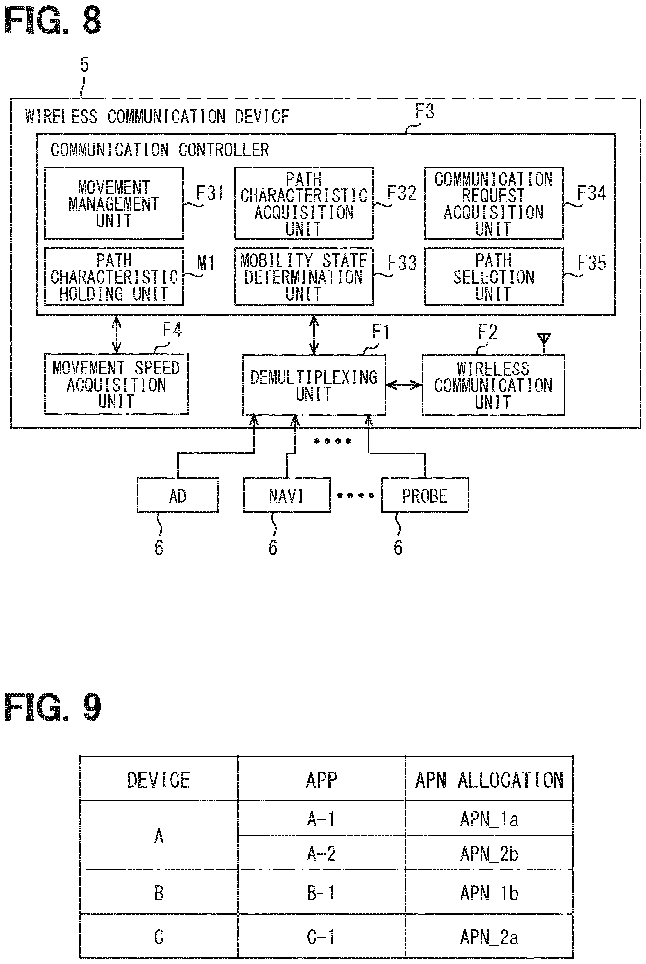

Further, as shown in FIG. 8, the wireless communication device 5 includes a movement speed acquisition unit F4 that acquires the movement speed of the vehicle Hv as the subject vehicle, and may change the operation mode according to the movement speed acquired by the movement speed acquisition unit F4. The movement speed acquisition unit F4 may acquire the movement speed from the vehicle speed sensor, the automated driving device 6A, and the like, and may estimate the movement speed based on the Doppler shift amount of the signal from the wireless base station 2.

For example, according to the movement speed acquired by the movement speed acquisition unit F4, the path characteristic acquisition unit F32 may reverse an evaluation policy for the allocation frequency at the time of evaluating the communication speed for each APN. Specifically, it may be determined that the higher the frequency, the higher the communication speed when the vehicle is traveling at a slow speed, and it may be determined that the lower the allocation frequency, the higher the communication speed during normal traveling.

Here, the low speed traveling refers to a state where the movement speed is less than a predetermined low speed threshold such as, for example, 10 km/h, 20 km/h, or the like. The state where the vehicle is traveling at the slow speed can also include a state of the autonomous driving for parking. The low speed threshold corresponds to a switching threshold. Further, the state of normal traveling is a state where the movement speed is equal to or higher than the slow speed threshold, and includes a state of high speed traveling. Note that the state of high speed movement refers to, for example, a state where the speed exceeds a predetermined high speed threshold such as 60 km/h or 80km/h.

As described above, the high frequency is more susceptible to fluctuations in the communication environment, and causes the communication speed to decrease. However, the communication speed does not always decrease as the frequency increases. When the vehicle is stopped or the like, the degree of change in the relative position is small. Therefore, the communication speed may increase as the allocation frequency increases. According to the configuration that changes the evaluation policy of the allocation frequency for evaluating the communication speed for each APN in accordance with the movement speed, it is possible to appropriately evaluate the communication speed for each APN in the vehicle wireless communication device 5 of which positional relationship with the wireless base station 2 easily changes. Further, as a result, it is possible to more appropriately allocate the communication path for each in-vehicle device 6.

Note that, instead of the movement speed, a mobility state determined by the number of cell reselections within a predetermined observation time may be used. The mobility state is determined to be at a high level, for example, when the number of cell reselections within a first observation time TCR notified from the network device exceeds a first upper limit number NH. Further, when the cell reselection number within the first observation time TCR exceeds the second upper limit number NM and also is lower than the first upper limit number NH, the mobility state is determined to be at a middle level. Further, the mobility state is determined to be at a normal level when the mobility state has not been determined to be at the middle level or the high level within a second observation time TCRH. As the first upper limit number NH, the second upper limit number NM, the first observation time TCR, and the second observation time TCRH, parameters of NCR_H, NCR_M, TCRmax, and TCRmaxHyst in system information distributed from the network device can be adopted. Note that the high frequency of performed cell reselection indirectly indicates that the movement speed of the vehicle Hv is high. That is, the mobility state determination value can be interpreted as an index that indirectly indicates the movement speed of the vehicle Hv. A state where the movement speed is less than the switching threshold includes the state where the mobility state is at the normal level.

By the way, when the APN allocated to a certain in-vehicle device 6 is changed, a communication between this in-vehicle device 6 and the external device 4 may be momentarily interrupted. This is because when the APN used for communication between a certain in-vehicle device 6 and a certain external device 4 is changed, searching and setting of a communication path using a new APN from the in-vehicle device 6 to the external device 4 are performed. Specifically, since an IP address and a port number applied to data communication change with path selection, it is necessary to exchange control signals between the network device and the wireless communication device 5 to ensure consistency of the communication settings such as the IP address.

Focusing on such a difficulty, while data communication for vehicle control is performed, or while the vehicle Hv travels, it is preferable that the execution of the path change process is suspend. The path change process is a process of changing the APN allocation to the vehicle control device such as the automated driving device 6A. For example, it is preferable that the path change process for the automated driving device 6A is executed on condition that the automated driving device 6A is not performing the data communication with the automated driving management center 4A, the vehicle Hv is being stopped, or the like. According to the configuration, it is possible to reduce a risk that data communication with high urgency is temporarily stopped in the middle. In addition, the path change process for the automated driving device 6A may be executed when a predetermined path change condition is satisfied such as, for example, when an APN with a larger PHR than the current APN occurs or when the change of the serving cell occurs. The path change condition may include a case where an APN different from the current APN is allocated to the vehicle control device by the path allocation process.

Further, the wireless communication device 5 may output a predetermined error signal to the automated driving device 6A, even when any APN which can be used by the wireless communication device 5 is selected as the APN for the automated driving and also the communication speed requested by the automated driving device 6A is not obtained. The error signal may be a signal indicating that the requested communication speed, in other words, real-time communication cannot be guaranteed. According to the configuration, based on the reception of the error signal from the wireless communication device 5, the automated driving device 6A may perform the vehicle control for safety such as, for example, a control of suppressing the traveling speed of the vehicle Hv by a predetermined amount or a control of transferring the authority to an occupant on the driver sheet.

Further, the wireless communication device 5 may sequentially output a communication speed report signal to the automated driving device 6A. The communication speed report signal is a signal that indicates a status of communication between the automated driving device 6A and the automated driving management center 4A. The communication speed report signal may be a signal directly or indirectly indicating a degree of communication delay such as, for example, an average value of delay time, a packet error rate, or the delay characteristic setting value. The communication speed here may be only a speed of upstream communication, or may be only a speed of downstream communication. According to the configuration, the automated driving device 6A can change the behavior (in other words, system response) of the vehicle Hv based on the communication speed report signal from the wireless communication device 5. For example, the automated driving device 6A may plan and operate a reduction of the traveling speed, a handover request, and the like, based on a state where the communication speed with the automated driving management center 4A is slow.

In addition, the wireless communication device 5 may store, as a communication log, data indicating the communication status including the allocation status of the APN for each in-vehicle device 6 in a storage device (not shown). According to the configuration, it may be possible to store the communication status during the automated driving. Further, it may be possible to leave data indicating that the communication error occurred. Such data can be used for cause analysis when an accident occurs during the automated driving, for example. By leaving the communication status with an external device during the automated driving as a log, it becomes easier to analyze the cause of the accident.

The wireless communication device 5 described above is suitable for the vehicle Hv that is designed according to an operational design domain (ODD). The ODD includes a condition that is satisfied when a delay time in communication with the automated driving management center 4A is less than a predetermined threshold value. According to the wireless communication device 5 described above, it is possible to reduce a risk that data communication related to the automated driving is delayed beyond a predetermined allowable time. In one example, the wireless communication device 5 described above sequentially transmits information indicating the degree of communication delay to the automated driving device 6A. Therefore, the automated driving device 6A can change the system response according to the communication status. As a result, a risk that the automated driving continues even though the ODD is not satisfied from the viewpoint of communication delay can be reduced. The ODD specifies conditions and environments in which the automated driving can be executed.

<Other Modifications>

The wireless communication device 5 does not have to control the data communication paths in units of in-vehicle device 6. The wireless communication device 5 may switch the communication paths in units of app (application software). For example, as shown in FIG. 9, when one in-vehicle device 6 executes multiple apps, the path selection unit F32 may allocate multiple APNs corresponding to respective apps to one in-vehicle device 6. The APN may be allocated for each in-vehicle device 6 or app. Devices A, B, and C shown in FIG. 9 may be, in this order, the automated driving device 6A, the navigation device 6B, and the probe device 6C, for example. An app A-1 can be set to, for example, an app that acquires traveling support information and generates a control plan. An app A-2 can be set to, for example, an app that uploads data indicating an operation state of the automated driving device 6A, which is locally stored in the vehicle Hv, to the automated driving management center 4A, for example. An app B-1 may be set to, for example, a navigation app. An app C-1 may be an app that generates probe data and uploads it to the map server 4B.

The expression "app" in this disclosure means application software. One APN may be allocated to multiple apps. The technical idea of allocating a wireless communication service to each in-vehicle device 6 in the present disclosure also includes a configuration of allocating a wireless communication service to each app. Further, the technical idea of allocating a certain wireless communication service to a certain in-vehicle device 6 or app also includes a technical idea of allocating the wireless communication service to data communication performed by the in-vehicle device 6 or app.

Further, in the above as one example, the delay request of each in-vehicle device 6 is expressed by a parameter, such as delay allowable value, that decreases in numerical value as the degree of the required immediacy decreases. However, the present disclosure is not limited to the expression. The delay request may be expressed by a parameter that increases in numerical value as the immediacy is more required. The delay request may be expressed in immediacy levels that indicate degrees of required immediacy. The higher immediacy level indicates that a shorter delay time is required.

<Additional Notes>

The device and the method described in the present disclosure may be also implemented by a dedicated computer which constitutes a processor programmed to execute one or more functions concretized by computer programs. Also, the device and the method described in the present disclosure may be also implemented by a dedicated hardware logic circuit. Also, the device and the method described in the present disclosure may be also implemented by one or more dedicated computers which are constituted by combinations of a processor for executing computer programs and one or more hardware logic circuits. The computer program may be stored in a computer-readable non-transitory tangible storage medium as an instruction executed by a computer. That is, the means and/or the functions which are provided by the wireless communication device 5 and the like may be provided by software stored in tangible memory devices and computers for executing them, only software, only hardware, or a combination thereof. For example, a part of or all of the functions of the wireless communication device 5 may be implemented as hardware. An aspect in which a certain function is implemented as hardware includes an aspect in which the function is implemented by use of one or more ICs or the like. The wireless communication device 5 may be implemented by using an MPU, a GPU, or a DFP (Data Flow Processor) instead of the CPU. The wireless communication device 5 may be implemented by combining multiple types of calculation processing devices such as a CPU, an MPU, and a GPU. The wireless communication device 5 may be implemented by using a SoC (System-on-Chip), Further, for example, various processing units may be implemented by using a FPGA (Field-Programmable Gate Array), an ASIC (Application Specific Integrated Circuit), or the like. It should be noted that the various programs described above may be stored in a non-transitory tangible storage medium. Various storage media such as HDD (Hard-disk Drive), SSD (Solid State Drive), EPROM (Erasable Programmable ROM), and SD card can be used as the program storage medium.

**Claims**

1.  A vehicle wireless communication device that includes a plurality of subscriber identity modules (55A, 55B), is used for a vehicle, used as an interface for communication between at least one in-vehicle device and an external device that is a different communication device placed outside the vehicle, and configured to use a plurality of wireless communication services respectively according to the plurality of subscriber identity modules, the vehicle wireless communication device comprising:

    a remaining power calculation unit (F33) configured to calculate, for each wireless communication service, a power headroom representing a remaining power of a transmission power with respect to a predetermined maximum transmission power based on a transmission power setting value for each wireless communication service;
    a delay allowable amount acquisition unit (F34) configured to acquire a delay allowable amount from the at least one in-vehicle device, the delay allowable amount indicating directly or indirectly a length of an allowable communication delay time; and
    a communication path selection unit (F35) configured to

    select the wireless communication service among the plurality of wireless communication services for communication between the at least one in-vehicle device and the external device based on the power headroom calculated by the remaining power calculation unit for each wireless communication service, and preferentially allocate the wireless communication service having a large power headroom to an in-vehicle device having a small delay allowable amount.

2.  The vehicle wireless communication device according to claim 1, wherein

    the at least one in-vehicle device includes a plurality of in-vehicle devices,
    the vehicle wireless communication device is connected to the plurality of in-vehicle devices and used,
    the delay allowable amount acquisition unit is configured to acquire the delay allowable amount from each in-vehicle device,
    the communication path selection unit is configured to select the wireless communication service for each in-vehicle device based on the power headroom of each wireless communication service and the delay allowable amount of each in-vehicle device, and
    the communication path selection unit is configured to preferentially allocate the wireless communication service having the large power headroom to an in-vehicle device having the small delay allowable amount as compared with an in-vehicle device having a large delay allowable amount.

**3.** The vehicle wireless communication device according to claim 2, further comprising

a path characteristic acquisition unit (F32) configured to acquire, as path characteristic information of each wireless communication service, a delay characteristic setting value from a network device (2, 31, 32, 33, 34) that constitutes a wireless communication network, the delay characteristic setting value being a parameter that indicates an upper limit value of an assumed range of a communication delay time, wherein

the communication path selection unit is configured to preferentially allocate the wireless communication service having the large power headroom to the in-vehicle device having the small delay allowable amount as compared with the in-vehicle device having the large delay allowable amount, and

when at least two power headroom are at a same level, the communication path selection unit preferentially allocates the wireless communication service having a small delay characteristic setting value to the in-vehicle device having the small delay allowable amount.

**4.** The vehicle wireless communication device according to claim 2 or 3, further comprising

a path characteristic acquisition unit (F32) configured to acquire, as path characteristic information of each wireless communication service, information including an allocation frequency from a network device (2, 31, 32, 33, 34) that constitutes a wireless communication network, wherein

the communication path selection unit is configured to preferentially allocate the wireless communication service having the large power headroom to the in-vehicle device having the small delay allowable amount as compared with the in-vehicle device having the large delay allowable amount, and

when at least two wireless communication services have a same power headroom, the communication path selection unit preferentially allocates the wireless communication service having a small allocation frequency to the small delay allowable amount.

**5.** The vehicle wireless communication device according to claim 2 or 3, further comprising

a movement speed acquisition unit (F4) configured to acquire a movement speed of a subject vehicle; and
a path characteristic acquisition unit (F32) configured to acquire, as path characteristic information of each wireless communication service, information including an allocation frequency from a network device (2, 31, 32, 33, 34) that constitutes a wireless communication network, wherein

the communication path selection unit is configured to preferentially allocate the wireless communication service having the large power headroom to the in-vehicle device having the small delay allowable amount,

when the movement speed acquired by the movement speed acquisition unit is less than a predetermined switching threshold in a situation where at least two wireless communication services have the power headroom at a same level, the communication path selection unit preferentially allocates a wireless communication service having a high frequency among the at least two wireless communication services having the power headroom at the same level to the in-vehicle device having the small delay allowable amount, and

when the movement speed acquired by the movement speed acquisition unit is equal to or higher than the switching threshold, the communication path selection unit preferentially allocates a wireless communication service having a low frequency among the at least two wireless communication services having the power headroom at the same level to the in-vehicle device having the small delay allowable amount.

**6.** The vehicle wireless communication device according to any one of claims 1 to 5, further comprising

a movement management unit (F31) configured to execute a process for switching a serving cell that provides the wireless communication service for each wireless communication service, wherein

the communication path selection unit executes a process for updating an allocation state of the wireless communication service for each in-vehicle device on a condition that the movement management unit executes the process for changing the serving cell of any of the at least two wireless communication services.

**7.** The vehicle wireless communication device according to any one of claims 1 to 6, wherein
the communication path selection unit is configured to execute a process for updating an allocation state of the wireless communication service for each in-vehicle device based on a fact that a subject vehicle has stopped.

8. The vehicle wireless communication device according to any one of claims 1 to 7, wherein

the at least one in-vehicle device includes a vehicle control device configured to communicate data related to automated driving or driving assistance to a predetermined external device, and
the communication path selection unit is configured to change the wireless communication service that has allocated to the vehicle control device based on a fact that data communication between the vehicle control device and the external device has not been performed or a subject vehicle has stopped.

9. The vehicle wireless communication device according to any one of claims 1 to 8, wherein

the at least one in-vehicle device includes a vehicle control device (6A) configured to communicate data related to automated driving or driving assistance to a predetermined external device, and
the vehicle wireless communication device is configured to output a predetermined error signal to the vehicle control device when a communication delay time does not become less than or equal to the delay allowable amount required by the vehicle control device in any one of the wireless communication services.

10. The vehicle wireless communication device according to any one of claims 1 to 9, wherein

the vehicle wireless communication device is used in a vehicle designed according to an operational design domain, the operational design domain includes a condition that is satisfied when a delay time in communication with the external device related to automated driving is less than a predetermined threshold,
the at least one in-vehicle device includes a vehicle control device (6A) configured to communicate data related to the automated driving to the external device, and
the vehicle wireless communication device is configured to output information to the vehicle control device, the information indicating a degree of delay in communication between the vehicle control device and the external device.

11. A communication control method for control of communication between at least one in-vehicle device of a vehicle and an external device that is a communication device placed outside the vehicle, the communication using a plurality of wireless communication services in parallel, the plurality of wireless communication services corresponding, respectively, to a plurality of subscriber identity modules, the communication control method being executed by at least one processor (51),
the communication control method comprising:

a remaining power calculation step (S2) that calculates, for each wireless communication service, a power headroom representing a remaining power of a transmission power with respect to a predetermined maximum transmission power based on a transmission power setting value for each wireless communication service;
a delay allowable amount acquisition step (S3) that acquires a delay allowable amount from the at least one in-vehicle device, the delay allowable amount indicating directly or indirectly a length of allowable communication delay time; and
a communication path selection step (S4) that

selects the wireless communication service for communication between the at least one in-vehicle device and the external device based on the power headroom calculated by the remaining power calculation step for each wireless communication service, and
preferentially allocates the wireless communication service having a large power headroom to an in-vehicle device having a small delay allowable amount.

# FIG. 1

# FIG. 2

# FIG. 3

WIRELESS COMMUNICATION DEVICE — 5

COMMUNICATION CONTROLLER — F3

| MOVEMENT MANAGEMENT UNIT — F31 | PATH CHARACTERISTIC ACQUISITION UNIT — F32 | COMMUNICATION REQUEST ACQUISITION UNIT — F34 |
| PATH CHARACTERISTIC HOLDING UNIT — M1 | MOBILITY STATE DETERMINATION UNIT — F33 | PATH SELECTION UNIT — F35 |

DEMULTIPLEXING UNIT — F1

WIRELESS COMMUNICATION UNIT — F2

AD — 6   NAVI — 6   • • • •   PROBE — 6

# FIG. 4

START

IDENTIFY SERVING CELL FOR EACH SIM — S1

ACQUIRE PHR FOR EACH APN — S2

ACQUIRE DELAY REQUEST FOR EACH DEVICE/APP — S3

SELECT COMMUNICATION PATH FOE EACH DEVICE/APP — S4

START DATA COMMUNICATION — S5

END

# FIG. 5

| | DELAY ALLOWABLE VALUE |
|---|---|
| AUTOMATIC DRIVING DEVICE | 100 |
| NAVIGATION DEVICE | 500 |
| PROVE DEVICE | 2000 |

| | PHR (dB) |
|---|---|
| APN_1 | 25 |
| APN_2 | 5 |
| – | – |

| | APN |
|---|---|
| AUTOMATIC DRIVING DEVICE | APN_1 |
| NAVIGATION DEVICE | APN_2 |
| PROVE DEVICE | APN_2 |

# FIG. 6

|  | DELAY ALLOWABLE VALUE |
|---|---|
| AUTOMATIC DRIVING DEVICE | 100 |
| NAVIGATION DEVICE | 500 |
| PROVE DEVICE | 2000 |
| DRIVING SUPPORT DEVICE | 200 |

| SIM | APN | PHR (dB) | dT (msec) | EXPECTED SPEED RANKING |
|---|---|---|---|---|
| #1 | APN_1a | 25 | 150 | 1 |
| | APN_1b | 25 | 500 | 2 |
| #2 | APN_2a | 5 | 200 | 3 |
| | APN_2b | 5 | 1000 | 4 |

|  | APN ALLOCATION |
|---|---|
| AUTOMATIC DRIVING DEVICE | APN_1a |
| NAVIGATION DEVICE | APN_2a |
| PROVE DEVICE | APN_2b |
| DRIVING SUPPORT DEVICE | APN_1b |

# FIG. 7

|  | DELAY ALLOWABLE VALUE |
|---|---|
| AUTOMATIC DRIVING DEVICE | 100 |
| NAVIGATION DEVICE | 500 |
| PROVE DEVICE | 2000 |
| DRIVING SUPPORT DEVICE | 200 |

| SIM | APN | PHR (dB) | FREQ (GHz) | EXPECTED SPEED RANKING |
|---|---|---|---|---|
| #1 | APN_1a | 25 | 0.8 | 1 |
| #1 | APN_1b | 25 | 1.5 | 2 |
| #2 | APN_2a | 5 | 2.5 | 3 |
| #2 | APN_2b | 5 | 3.7 | 4 |

|  | APN ALLOCATION |
|---|---|
| AUTOMATIC DRIVING DEVICE | APN_1a |
| NAVIGATION DEVICE | APN_2a |
| PROVE DEVICE | APN_2b |
| DRIVING SUPPORT DEVICE | APN_1b |

# FIG. 8

5

WIRELESS COMMUNICATION DEVICE

F3

COMMUNICATION CONTROLLER

| MOVEMENT MANAGEMENT UNIT | F31 | PATH CHARACTERISTIC ACQUISITION UNIT | F32 | COMMUNICATION REQUEST ACQUISITION UNIT | F34 |

| PATH CHARACTERISTIC HOLDING UNIT | M1 | MOBILITY STATE DETERMINATION UNIT | F33 | PATH SELECTION UNIT | F35 |

F4 — MOVEMENT SPEED ACQUISITION UNIT

F1 — DEMULTIPLEXING UNIT

F2 — WIRELESS COMMUNICATION UNIT

AD — 6

NAVI — 6

PROBE — 6

# FIG. 9

| DEVICE | APP | APN ALLOCATION |
|--------|-----|----------------|
| A | A-1 | APN_1a |
| A | A-2 | APN_2b |
| B | B-1 | APN_1b |
| C | C-1 | APN_2a |

## INTERNATIONAL SEARCH REPORT

| | International application No. |
|---|---|
| | **PCT/JP2021/036081** |

**A. CLASSIFICATION OF SUBJECT MATTER**

*H04W 4/00*(2018.01)i; *H04W 4/44*(2018.01)i; *H04W 48/18*(2009.01)i
FI: H04W48/18; H04W4/44; H04W4/00 111

According to International Patent Classification (IPC) or to both national classification and IPC

**B. FIELDS SEARCHED**

Minimum documentation searched (classification system followed by classification symbols)

H04B 7/24- 7/26; H04W 4/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-531032 A (HUAWEI TECHNOLOGIES CO., LTD.) 24 October 2019 (2019-10-24)<br>entire text, all drawings | 1-11 |
| A | JP 2020-504510 A (PANASONIC INTELLECTUAL PROPERTY CORP. OF AMERICA) 06 February 2020 (2020-02-06)<br>entire text, all drawings | 1-11 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 December 2021** | **28 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**_PCT/JP2021/036081_**

| Patent document cited in search report | | | Publication date (day/month/year) | Patent family member(s) | | | Publication date (day/month/year) |
|---|---|---|---|---|---|---|---|
| JP | 2019-531032 | A | 24 October 2019 | WO | 2018/065049 | A1 | |
| | | | | entire text, all drawings | | | |
| | | | | CN | 109155968 | A | |
| JP | 2020-504510 | A | 06 February 2020 | US | 2019/0357137 | A1 | |
| | | | | entire text, all drawings | | | |
| | | | | EP | 3346764 | A1 | |
| | | | | CN | 110140378 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020170640 A

- JP 4655955 B

**Non-patent literature cited in the description**

- Evolved Universal Terrestrial Radio Access (E-UTRA); Physical layer procedures (Release 8). *3GPP TS 36.213 V15.1.0,* July 2018